**Europäisches Patentamt**

**European Patent Office**

**Office européen des brevets**

(19)

(11) Veröffentlichungsnummer: **0 102 972**
**B1**

(12) EUROPÄISCHE PATENTSCHRIFT

(45) Veröffentlichungstag der Patentschrift:
**14.05.86**

(51) Int. Cl.⁴: **B 65 G 1/04,** B 65 G 47/10, B 66 F 9/07

(21) Anmeldenummer: **83900778.8**

(22) Anmeldetag: **01.03.83**

(86) Internationale Anmeldenummer:
**PCT/DE 83/00035**

(87) Internationale Veröffentlichungsnummer:
**WO 83/03086 (15.09.83** Gazette 83/21)

(54) **KOMMISSIONIERVORRICHTUNG FÜR IN EINER LAGEREINRICHTUNG AUS EINER MEHRZAHL VON UNTER BILDUNG VON GASSEN AUFGESTELLTEN REGALEN IN PALETTEN EINGELAGERTES LANGGUT.**

(30) Priorität: **02.03.82 DE 3207341**

(43) Veröffentlichungstag der Anmeldung:
**21.03.84 Patentblatt 84/12**

(45) Bekanntmachung des Hinweises auf die Patenterteilung:
**14.05.86 Patentblatt 86/20**

(84) Benannte Vertragsstaaten:
**BE DE FR**

(56) Entgegenhaltungen:
**DE - A - 2 102 098**
**DE - A - 2 950 111**

(73) Patentinhaber: **Theobald, Adolf, Merschstrasse 5, D-5758 Fröndenberg-Warmen (DE)**

(72) Erfinder: **Theobald, Adolf, Merschstrasse 5, D-5758 Fröndenberg-Warmen (DE)**

(74) Vertreter: **Henfling, Fritz, Dipl.-Ing., Beurhausstrasse 7, D-4600 Dortmund 1 (DE)**

ACTORUM AG

## Beschreibung

Die Erfindung betrifft eine Kommissioniervorrichtung für Langgut, wie Stabstahl und dgl., das in Paletten getrennt nach Dimensionierung und/oder Profilform abgepackt in einer Lagereinrichtung aus einer Mehrzahl von unter Bildung von Gassen aufgestellten Regalen eingelagert ist, wobei aus Paletten die auf in den Gassen geführten Regalförderzeuge überführt worden sind, Materialkommissionen zusammengestellt und mittels einer Überhebevorrichtung abgeführt werden.

Eine gattungsgemässe Kommissioniervorrichtung ist in der DE-A-2 102 098 beschrieben. Danach ist in einer Gasse zwischen zwei Regalen ein Regalförderzeug in Gestalt eines Hubtisches vorgesehen, auf den Paletten zur Entnahme von Langgut aus den Regalen überführt werden und auf dem die jeweilige Materialkommission zusammengestellt wird. Die auf dem Hubtisch zusammengestellte Materialkommission wird sodann mit Hilfe einer Überhebevorrichtung abtransportiert. Hierbei ist das Regalförderzeug während der Zusammenstellung der Materialkommission blockiert, so dass sich kurze Taktzeiten moderner Regalförderzeuge nicht voll ausnutzen lassen.

Ausgehend vom im Vorausgehenden umrissenen Stand der Technik liegt der Erfindung das Bedürfnis nach einer Lösung zugrunde, die es ermöglicht, die kurzen Taktzeiten moderner Regalförderzeuge voll auszunutzen.

Die Aufgabe wird mit einer gattungsgemässen Kommissioniervorrichtung gelöst, bei der erfindungsgemäss in den Gassen zwischen den Regalen bzw. unterhalb der aufgeständerten Regale spurgebundene, nach einer Längsseite aus der Lagereinrichtung heraus verfahrbare, die aus den Regalen entnommenen Paletten vom Regalförderzeug übernehmende Transportwagen vorgesehen sind, und an einer Längsseite der Lagereinrichtung ein über die Länge der Lagereinrichtung verfahrbarer Wandlaufkran vorgesehen ist, an dessen Ausleger einerseits eine in Fahrtrichtung des Krans verfahrbare Traverse angeordnet ist, an der im Abstand voneinander mindestens zwei Materialgreifer synchron heb- und senkbar aufgehängt sind, und andererseits eine Traverse an der eine den Materialgreifern zugewandte Kragarmaufnahme für von den Greifern erfasstes Material heb- und senkbar aufgehängt ist.

Zur Zusammenstellung einer Kommision werden die entsprechendes Material enthaltenden Paletten aus der Lagereinrichtung abgerufen und in die Entnahmeposition im Fahrweg des Wandlaufkrans überführt. Sodann werden die in Entnahmeposition befindlichen Paletten mit dem Kran nacheinander angefahren und nacheinander dem Lieferauftrag entsprechende Materialmengen mit den Bestandteil des Krans bildenden Greifern aus den Paletten in die Bestandteil des Krans bildende Aufnahme unter Bildung der Gesamtkommission überhoben, die in der Aufnahme umreift und mittels des Krans der Verladung bzw. der Bereitstellung zur Verladung zugeführt wird. Noch während der Übergabe des von den Greifern erfassten Materials an die Aufnahme kann der Kran selbst bereits zur nächsten Palette verfahren werden. Paletten, aus denen bereits Material entnommen worden ist, können während der Kommissionierung durch andere, Bestandteil der Lagereinrichtung bildende Paletten ausgetauscht werden. Die Umreifung der zusammengestellten Kommission und die Übergabe der umreiften Kommission für Verladung schliessen sich ohne weiteres an. Sämtliche in Zusammenhang mit der Kommissionierung anfallenden Tätigkeiten spielen sich im Bereich der vom Regalförderzeug unabhängigen Kommissioniervorrichtung ab. Das Regalförderzeug steht somit auch während der Kommissionierung für die Überführung weiterer Paletten in Bereitstellungsposition für die Materialentnahme wie auch für die Rücküberführung nicht mehr benötigter Paletten in die Regale zur Verfügung. Insgesamt ergibt sich unter Ausschöpfung der kurzen Taktzeit moderner Regalförderzeuge eine denkbar rasche Abfolge bei der Zusammenstellung von Materialkommissionen.

In der Regel wird man mit zwei Materialgreifern auskommen. Bei überlangem Material, das zum Durchhängen neigt, kann es allerdings angebracht sein mehr als zwei Materialgreifer vorzusehen.

Das synchrone Heben und Senken der Materialgreifer lässt sich dadurch sicherstellen, dass die Greifer an einem heb- und senkbaren Träger angeordnet werden, an dem eine von der Greifertraverse ausgehende Hubvorrichtung angreift. Als Hubvorrichtung dient zweckmässigerweise ein Hubelektrozug, der das entlastete Aufsetzen der Greifer auf das zu überhebende Material gewährleistet. Damit der mit den Greifern versehene Träger seine lagergerechte Orientierung beibehält, ist zweckmässigerweise eine Zwangsführung für den Träger vorgesehen, beispielsweise in Gestalt von sich zwischen der Greifertraverse und dem Träger erstreckenden Kniehebeln.

Längs des Trägers verfahrbare Greifer ermöglichen es, die Greifer an dem Träger unterschiedlichen Materiallängen Rechnung tragend zu positionieren. Als Materialgreifer bieten sich insbesondere Magnetgreifer und Sauggreifer an, letztere zumal dann, wenn mit Magnetgreifern nicht erfassbares Material, wie Langgut aus Kunststoff, überhoben werden muss. Sowohl Magnetgreifer als auch Sauggreifer lassen sich leicht auf die zu überhebende Materialmenge einstellen, Magnetgreifer unter anderem auch dadurch, dass sie um ihre Längsmittelachse verschwenkt werden.

Die Materialaufnahme besteht vorzugsweise aus einer Mehrzahl von im Abstand voneinander an der Aufnahmetraverse abgehängten, synchron heb- und senkbaren Kragarmen. Auch hierbei stellt eine Zwangsführung die Beibehaltung der lagerechten Orientierung der Kragarmaufnahmen sicher. Dazu können die Kragarmaufnahmen beispielsweise an einem in von der Aufnahmetraverse ausgehenden seitlichen Führungen heb- und senkbar geführten Träger angeordnet sein. Als Stellmittel bietet sich hierbei ein von einem Stellmotor beaufschlagter Zahnstangentrieb an.

In Ausgestaltung kann auch die Aufnahmetraverse in Fahrtrichtung des Krans verfahrbar am Kranausleger angeordnet sein, woraus eine weitere Einsparung an Zeit bei der Zusammenstellung von Kommissionen und/oder der Übergabe einer zusammengestellten Kommission an die Verladung resultiert.

Im Sinne einer Bündelung der in der Aufnahme zusammengestellten Kommission erweist es sich als vorteilhaft, die Kragarmaufnahmen V-förmig bzw. wannenförmig auszubilden. Zweckmässigerweise sind entsprechend ausgestaltete Aufnahmen den Kragarmen lösbar zugeordnet, damit sie im Bedarfsfall entfernt werden können, etwa wenn im Karton abgepacktes Material der Verladung zugeführt werden soll.

In Komplettierungen der Kommissioniervorrichtung ist ein an der Aufnahmetraverse zusammen mit einem Umreifungs- und Verschlussmechanismus quer zur Fahrtrichtung des Krans verfahrbarer Verpackungsbandspeicher vorgesehen, womit die zusammengestellte Kommission zum Abtransport umreift wird, was zeitsparend während des Verfahrens des Kommissionierkrans zur Übergabe erfolgen kann.

Eine in die Aufhängung für die Aufnahme integrierte Waage zeigt sowohl das Gewicht der jeweils überhobenen Teilmenge als auch das Gewicht der Gesamtkommission an. Sie kann mit einer die Gewichte auswerfenden Druckeinrichtung kombiniert sein.

Konstruktive Abwandlungen beispielsweise der Zwangsführungen für den mit den Materialgreifern versehenen Träger und für den mit den Materialaufnahmen versehenen Träger wie auch der Stellmittel für diese Träger liegen im Rahmen der Erfindung. Für die Verfahrbarkeit des Wandlaufkrans auf der Kranbahn wie auch der Greifertraverse und der Aufnahmetraverse am Kranausleger sowie der Materialgreifer am für sie vorgesehenen Träger und der Umreifungseinrichtung an der Aufnahmetraverse stehen übliche Antriebe zur Verfügung.

In der Zeichnung ist die Erfindung anhand eines in schematischer Weise dargestellten Ausführungsbeispiels weitergehend erläutert. Es zeigen:

Fig. 1 eine Ansicht der Kommissioniervorrichtung in Richtung des Pfeils I in Fig. 2,

Fig. 2 eine Ansicht der Kommissioniervorrichtung in Richtung der Pfeile II in Fig. 1.

Die mit der Kommissioniervorrichtung versehene Lagereinrichtung wird gebildet von Regalen 11, 12, 13, 14..., die unter Bildung von Gassen 16, 17... aufgestellt sind. In die Fächer 111, 112, 113... der als Kragarmregale ausgebildeten Regale sind Paletten 22 eingelagert, die Langgut 23 unterschiedlicher Abmessungen und/oder Profilformen enthalten.

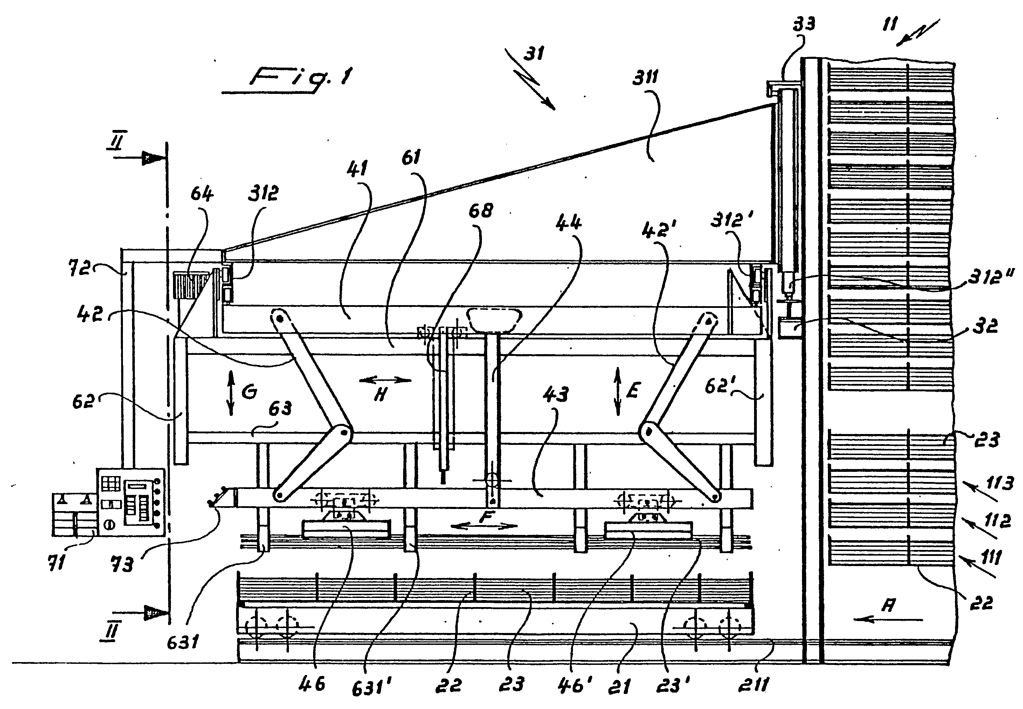

Zur Kommissionierung — Zusammenstellung eines unterschiedliche Positionen enthaltenden Lieferauftrags — werden die entsprechenden Paletten 22 in den Gassen 16, 17... zwischen den Regalen 11, 12, 13... überhoben, an einen in einem unterhalb bodenfrei aufgeständerter Regale, z.B. 12, befindlichen spurgebundenen (211) Wagen 21 übergeben und aus der Lagereinrichtung im Sinne des Pfeils A heraus verfahren (Fig. 1).

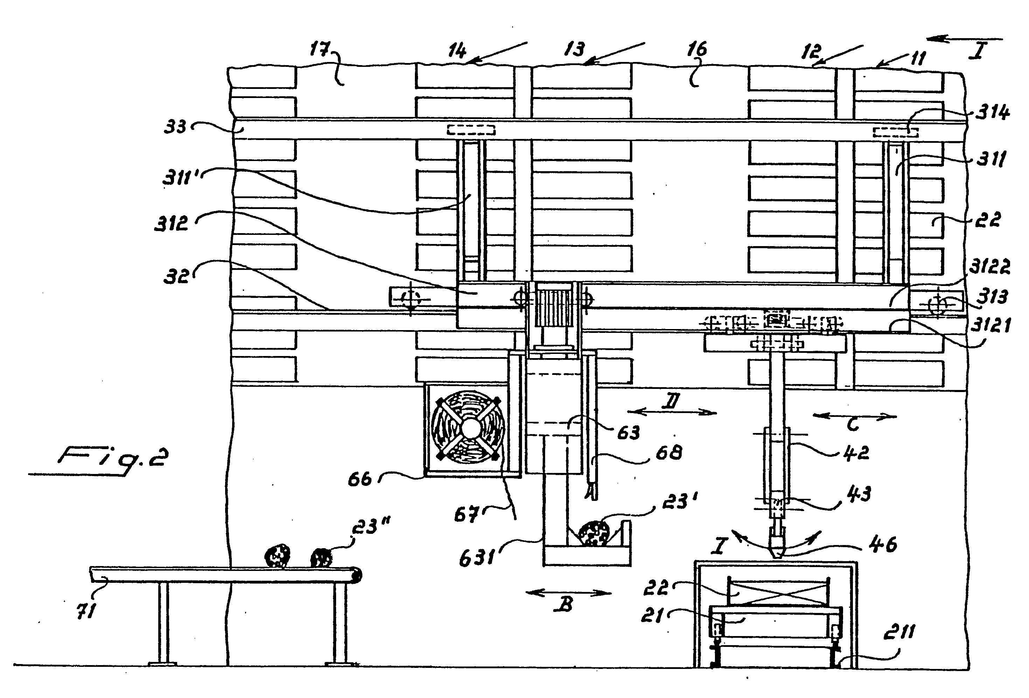

Die Kommissionierung erfolgt mit dem Kommissionierkran 31. Es handelt sich dabei um einen Wandlaufkran, der an einer Längsseite der Lagereinrichtung auf einer sich über die Länge der Lagereinrichtung erstreckenden Kranbahn 32/33 verfahrbar ist (Doppelpfeil B in Fig. 2). Der Kran wird gebildet von zwei im Abstand voneinander angeordneten Kragarmen bzw. Auslegern 311, 311'..., die sich über Laufräder 313 und Führungsräder 314 gegen die Fahrbahn 32 und gegen die Führungsbahn 33 abstützen und miteinander an den Stirnseiten durch Streben 312, 312', 312''... verbunden sind.

An den übereinander jeweils zwei Fahrbahnen 3121, 3122 aufweisenden Streben 312, 312' sind einerseits eine Traverse 41 und andererseits eine Traverse 61 im Sinne der Doppelpfeile C und D in Fig. 2 verfahrbar. An der Traverse 41 ist ein Träger 43 an eine Zwangsführung bildenden Kniehebeln 42, 42' aufgehängt mittels einer Hubvorrichtung 44, z.B. einem Elektrozug, heb- und senkbar angeordnet (Doppelpfeil E in Fig. 1). Auf dem Träger 43 sind nach dem Einschienenhängebahnprinzip im Abstand voneinander zwei Greifer 46, 46' im Sinne der Doppelpfeile F in Fig. 1 verfahrbar. An der Traverse 61 ist ein sich in seitlichen Führungen 62, 62' führender, mittels einer Hubvorrichtung 64 heb- und senkbarer (Doppelpfeil G in Fig. 1) Träger 63 angeordnet, an dem zu den Greifern 46, 46' hin ausladende Kragarme 631, 631'... abgehängt sind, die eine Aufnahme für von mit der Greifvorrichtung 41... erfasstes und überhobenes Langgut 23' bilden.

Auf der von der Greifvorrichtung 41... abgekehrten Seite der Aufnahme 61... ist ein Speicher 66 für Verpackungsband 67 zum Umgreifen des in der Aufnahme 61... abgelegten Materials 23' vorgesehen, der zusammen mit einem vor der Aufnahme 61... vorgesehenen Spann- und Verschliessmechanismus 68 längs der Aufnahmetraverse 61 verfahrbar ist (Doppelpfeil H in Fig. 1).

Vor Kopf des Krans, und zwar in Bodennähe, ist ein an einem an der freien Stirnseite des Krans angelenkten Schwenkarm 72 aufgehängtes Pult 71 für das Bedienungspersonal vorgesehen, das dann auch die Eingabe für die jeweilige, von den Greifern 46, 46' zu überhebende Materialmenge und die Anzeige einer in die Aufnahme 61... integrierten Waage aufweist. Mit 73 ist ein die Betätigungsschalter für die Kranbewegungen aufweisendes Pult am Bestandteil der Greifvorrichtung 41... bildenden Träger 43 bezeichnet, das dann auch Schalter für die Betätigung des Regalförderzeuge aufweisen kann. Pult 71 und Pult 72 sind für das Bedienungspersonal ohne Änderung des Standorts zugänglich.

Zur Zusammenstellung einer Langgut verschiedener Abmessungen und/oder Profilformen umfassenden Kommission werden die entsprechenden Paletten 22 zunächst in die insbesondere in Fig. 2 erkennbare Entnahmeposition ausserhalb der Lagereinrichtung überführt. Sodann wird der Kran 31 über eine in Frage kommende Palette 22 verfahren und die Bestandteil des Krans 31 bildende Greifvorrichtung 41... auf die Palette 23 ausgerichtet. Danach werden die Bestandteil der Greifvorrichtung 41... bildenden Greifer 46, 46', etwa Magnetgreifer aber auch Sauggreifer, auf das in der Palette 22 befindliche Material 23 abgesenkt und die dem Auftrag entsprechende Materialmenge 23' mit den dementsprechend eingestellten Greifern 46, 46' auf ein Niveau angehoben, das oberhalb der Bestandteil der Aufnahme 61... bildenden Kragarme 631, 631'... liegt. Das angehobene Material 23' wird nach Verfahren der Greifvorrichtung 41... gegen die Aufnahme 61... in die Kragarme 631, 631'... fallen gelassen bzw. abgelegt. Während des Verfahrens der Greifvorrichtung 41... gegen die Aufnahme 61... kann der Kran 31 selbst bereits die nächste, andere Materialabmessungen bzw. Profilformen enthaltende Palette 22 anfahren. Parallellaufend kann die vorausgehende Palette 22 wieder eingelagert und an ihrer Stelle eine weitere Palette 22 in Entnahmeposition überführt werden. Aus der vom Kram 31 neu angesteuerten Palette 22 wird in entsprechender Weise Material gemäss dem Gesamtauftrag entnommen und der Bestandteil des Krans 31 bildenden Aufnahme 61... zugeführt. Das wird fortgesetzt, bis die in Auftrag gegebene Kommission zusammengestellt ist, d.h., das entsprechende Material auf den Kragarmen 631, 631'... der Aufnahme 61... abgelegt ist. Sodann wird das auf den Kragarmen 631, 631'... befindliche Material 23' mehrfach umreift (66, 67, 68) und der Kran 31 zu einem am Ende der Lagereinrichtung befindlichen Transportfahrzeug, gegebenenfalls auch einem die entferntliegende Verladestelle anlaufenden Transportband 71 verfahren, auf dem die abgepackten Kommissionen 23'' durch Absenken der Bestandteil der Aufnahme 61 bildenden Kragarme 631, 631'... abgelegt werden.

Die von den Greifern jeweils zu überhebende Materialmenge lässt sich bei Magnetgreifern durch entsprechende Einstellung der Magnetkraft und bei Sauggreifern durch entsprechende Einstellung der Saugleistung vorgeben. Bei Magnetgreifern ist eine Variierung der Materialmenge auch durch Veränderung der Lage der Greifer dergestalt möglich, dass sie um ihre Längsmittelachse im Sinne des Doppelpfeils I in Fig. 2 verschwenkt werden.

## Patentansprüche

1. Kommissioniervorrichtung für Langgut (23), wie Stabstahl und dgl., das in Paletten (22) getrennt nach Dimensionierung und/oder Profilform abgepackt in einer Lagereinrichtung aus einer Mehrzahl von unter Bildung von Gassen (16, 17...) aufgestellten Regalen (11, 12, 13, 14...) eingelagert ist, wobei aus Paletten (22), die auf in den Gassen (16, 17) geführten Regalförderzeuge überführt worden sind, Materialkommissionen (23') zusammengestellt und mittels einer Überhebevorrichtung abgeführt werden, dadurch gekennzeichnet, dass in den Gassen (16, 17) zwischen den Regalen (11, 12, 13, 14) bzw. unterhalb der aufgeständerten Regale (11, 12, 13, 14) spurgebundene, nach einer Längsseite aus der Lagereinrichtung heraus verfahrbare, die aus den Regalen (11, 12, 13, 14) entnommenen Paletten (22) vom Regalförderzeug übernehmende Transportwagen (21) vorgesehen sind, und dass an einer Längsseite der Lagereinrichtung ein über die Länge der Lagereinrichtung verfahrbarer Wandlaufkran (31) vorgesehen ist, an dessen Ausleger (311) einerseits eine in Fahrtrichtung des Krans (31) verfahrbare Traverse (41) angeordnet ist, an der im Abstand voneinander mindestens zwei Materialgreifer (46, 46') synchron heb- und senkbar aufgehängt sind, und andererseits eine Traverse (61), an der eine den Materialgreifern (46, 46') zugewandte Kragarmaufnahme (631) für von den Greifern (46, 46') erfasstes Material (23') heb- und senkbar aufgehängt ist.

2. Kommissioniervorrichtung nach Anspruch 1, dadurch gekennzeichnet, dass die der Greifertraverse (41) zugeordneten Materialgreifer (46, 46') an einem sich quer zur Fahrtrichtung des Krans erstreckenden heb- und senkbaren Träger (43) angeordnet sind, an dem eine von der Greifertraverse ausgehende Hubvorrichtung (44) angreift.

3. Kommissioniervorrichtung nach einem der Ansprüche 1 und 2, gekennzeichnet durch sich zwischen der Greifertraverse (41) und dem Träger (43) erstreckende Kniehebelführungen (42, 42').

4. Kommissioniervorrichtung nach einem der Ansprüche 2 und 3, gekennzeichnet durch an dem Träger (43) quer zur Fahrtrichtung des Krans (31) verfahrbare Greifer (46, 46').

5. Kommissioniervorrichtung nach einem der Ansprüche 1 bis 4, gekennzeichnet durch um ihre parallel zur Achse des die Greifer (46, 46') tragenden Trägers (43) verlaufende Längsmittelachse verschwenkbare Greifer (46, 46').

6. Kommissioniervorrichtung nach einem der Ansprüche 1 bis 5, dadurch gekennzeichnet, dass die Materialaufnahme von einer Mehrzahl von im Abstand voneinander an der Aufnahmetraverse (61) angeordneten, synchron heb- und senkbaren Kragarmen (631, 631'...) gebildet wird.

7. Kommissioniervorrichtung nach Anspruch 6, dadurch gekennzeichnet, dass die Aufnahmen (631, 631'...) von einem in von der Aufnahmetraverse (61) ausgehenden seitlichen Führungen (62, 62') heb- und senkbar geführten Träger (63) ausgehen.

8. Kommissioniervorrichtung nach einem der Ansprüche 1 bis 7, gekennzeichnet durch eine in Fahrtrichtung des Krans (31) verfahrbare Aufnahmetraverse (61).

9. Kommissioniervorrichtung nach einem der Ansprüche 1 bis 8, dadurch gekennzeichnet, dass die Kragarmaufnahmen (631, 631'...) V-förmig bzw. wannenförmig ausgebildet sind.

10. Kommissioniervorrichtung nach Anspruch 9, dadurch gekennzeichnet, dass die V-förmigen bzw. wannenförmigen Aufnahmen den Kragarmen (631, 631'...) lösbar zugeordnet sind.

11. Kommissioniervorrichtung nach einem der Ansprüche 1 bis 9, gekennzeichnet durch eine in die Aufhängung für die Aufnahme integrierte Waage.

12. Kommissioniervorrichtung nach einem der Ansprüche 1 bis 10, gekennzeichnet durch einen der Aufnahmetraverse (61) zugeordneten, zusammen mit einem Umreifungs- und Verschlussmechanismus an der Aufnahmetraverse (61) quer zur Fahrtrichtung des Krans (31) verfahrbaren Verpackungsbandspeicher (66).

## Claims

1. Apparatus for the preparation of consignments of long material (23), such as rod steel and the like, which is stored separately on pallets (22) and packed according to the dimensions and/or profile shape in a storage system which includes a plurality of shelves (11, 12, 13, 14...) arranged so as to form lanes (16, 17...), wherein material consignments (23') are assembled from pallets (22) which have been transferred to shelf conveyor means guided in the lanes (16, 17), and said consignments are discharged by means of a lift-over device, characterised in that transport vehicles (21) are provided which are mounted on tracks in the lanes (16, 17) between the shelves (11, 12, 13, 14) or below the overhead-mounted shelves (11, 12, 13, 14), said vehicles being movable towards a longitudinal end from the storage system and taking-over from the shelf conveyor means the pallets (22) which have been removed from the shelves (11, 12, 13, 14), and in that a travelling crane (31) is provided on a longitudinal end of the storage system and is movable along the length of the storage system, the boom (311) of said crane being provided at one end with a cross-member (41) which is movable in the direction of movement of the crane (31) and carries at least two material pick-ups (46, 46') which are spaced at a distance from each other and which are synchronously raisable and lowerable, and said boom being provided at the other end with a cross-member (61) which supports in a lowerable and raisable manner a centilever arm collecting device (631) for material (23') picked-up by the pick-ups (46, 46'), said collecting device facing the material pick-ups (46, 46').

2. Apparatus for the preparation of consignments according to claim 1, characterised in that the material pick-ups (46, 46') associated with the pick-up cross-member (41) are located on a support (43) which extends at right angles to the direction of movement of the crane and can be raised and lowered, a lifting device (44) projecting from the pick-up cross-member and engaging with said support.

3. Apparatus for the preparation of consignments according to one of claims 1 and 2, characterised by elbow lever guides (42, 42') which extend between the pick-up cross-member (41) and the support (43).

4. Apparatus for the preparation of consignments according to one of claims 2 and 3, characterised by pick-ups (46, 46') which are displaceable along the support (43) at right angles to the direction of the crane (31).

5. Apparatus for the preparation of consignments according to one of claims 1 to 4, characterised by pick-ups (46, 46') which are pivotable about their longitudinal centre axis which extends parallel to the axis of the support (43) carrying the pick-ups (46, 46').

6. Apparatus for the preparation of consignments according to one of claims 1 to 5, characterised in that the material collecting device is formed from a plurality of cantilever arms (631, 631'...), which can be raised and lowered synchronously and are disposed at a distance from one another on the collecting cross-member (61).

7. Apparatus for the preparation of consignments according to claim 6, characterised in that the collecting devices (631, 631'...) extend from a support (63) which is raisably and lowerably guided in lateral guides (62, 62') extending from the collecting cross-member (61).

8. Apparatus for the preparation of consignments according to one of claims 1 to 7, characterised by a collecting cross-member (61) which is displaceable in the direction of movement of the crane (31).

9. Apparatus for the preparation of consignments according to one of claims 1 to 8, characterised in that the cantilever arm collecting devices (631, 631'...) have a V or trough shape.

10. Apparatus for the preparation of consignments according to claim 9, characterised in that the V-shaped or trough-shaped collecting devices are detachably associated with the cantilever arms (631, 631'...).

11. Apparatus for the preparation of consignments according to one of claims 1 to 9, characterised by a weighing device which is incorporated in the mounting for the collecting device.

12. Apparatus for the preparation of consignments according to one of claims 1 to 10, characterised by a packaging strip storage unit (66) which is associated with the collecting cross-member (61) and is displaceable at right angles to the direction of movement of the crane (31) together with a binding and securing mechanism on the collecting cross-member (61).

**Revendications**

1. Dispositif de préparation des commandes de longues marchandises (23) comme de l'acier en barres et des matériaux analogues, qui, déchargé séparément selon les dimensions et/ou la forme de profil dans des palettes (22), est stocké dans une installation de stockage comprenant une pluralité de rayonnages (11, 12, 13, 14...) installés en formant des couloirs (16, 17...), des rassemblements de matériau (23') étant groupés à partir de palettes (22) qui ont été transférées sur des engins de manutention pour rayonnages, guidés dans le couloirs (16, 17) et étant évacués au moyen d'un dispositif de soulèvement, caractérisé par la présence dans les couloirs (16, 17) de chariots de transport (21) guidés entre les rayonnages (11, 12, 13, 14) ou au-dessous des rayonnages (11, 12, 13, 14) supportés sur leurs montants, pouvant sortir de l'installation de stockage par un grand côté, recevant de l'engin de manutention pour rayonnages les palettes (22) prélevées des rayonnages (11, 12, 13, 14), et par la présence sur un grand côté de l'installation de stockage d'une grue roulante (31) mobile sur la longueur de l'installation de stockage, sur la flèche (311) de laquelle est placée d'une part une traverse (41) mobile dans la direction de déplacement de la grue (31), sur laquelle au moins deux organes preneurs de matériau (46, 46') sont suspendus à distance mutuelle de façon à pouvoir monter et descendre en synchronisme et d'autre part, une traverse (61) à laquelle un bras en porte à faux (631) comportant un réceptacle destiné au matériau (23') saisi par les organes preneurs (46, 46'), situé du côté desdits organes preneurs (46, 46'), est suspendu de façon à pouvoir monter et descendre.

2. Dispositif selon la revendication 1, caractérisé en ce que les organes preneurs (46, 46') rattachés à la traverse (41) desdits organes preneurs sont placés sur une poutre (42) pouvant monter et descendre, dirigée transversalement par rapport à la direction de déplacement de la grue, sur laquelle agit un dispositif élévateur (44) partant de la traverse des organes preneurs.

3. Dispositif selon la revendication 1 ou 2, caractérisé par des guides à genouillères (42, 42') s'étendant entre la traverse (41) des organes preneurs et la poutre (43).

4. Dispositif selon la revendication 2 ou 3, caractérisé en ce que les organes preneurs (46, 46') sont mobiles sur la poutre (43) transversalement par rapport à la direction de déplacement de la grue (31).

5. Dispositif selon l'une des revendications 1 à 4, caractérisé en ce que les organes preneurs (46, 46') sont mobiles autour de leur axe de symétrie longitudinal dirigé parallèlement à l'axe de la poutre (43) supportant les organes preneurs (46, 46').

6. Dispositif selon l'une des revendications 1 à 5, caractérisé en ce que l'ensemble de réceptacle du matériau est formé par une pluralité de bras en porte à faux (631, 631'...) disposés à intervalles mutuels sur la traverse de réceptacle (61), pouvant monter et descendre en synchronisme.

7. Dispositif selon la revendication 6, caractérisé en ce que les bras (631, 631'...) comportant un réceptacle partent d'une poutre (63) guidée de façon à pouvoir monter et descendre dans des glissières latérales (62, 62') partant de la traverse de réceptacle (61).

8. Dispositif selon l'une des revendications 1 à 7, caractérisé en ce que la traverse de réceptacle (61) est mobile dans la direction de déplacement de la grue (31).

9. Dispositif selon l'une des revendications 1 à 8, caractérisé en ce que les réceptacles sur bras en porte à faux (631, 631'...) ont une forme de V ou de cuvette.

10. Dispositif selon la revendication 9, caractérisé en ce que les réceptacles en forme de V ou de cuvette sont rattachés de façon amovible aux bras en porte à faux (631, 631'...).

11. Dispositif selon l'une des revendications 1 à 9, caractérisé par une balance intégrée dans la suspension destinée au prélèvement.

12. Dispositif selon l'une des revendications 1 à 10, caractérisé par un réservoir de bandes d'emballage (66) rattaché à la traverse de réceptacle (61) pouvant se déplacer sur la traverse (61) perpendiculairement à la direction de déplacement de la grue (31) en même temps qu'un mécanisme banderoleur et de fermeture.

*Fig.1*

0 102 972

*Fig.2*

0 102 972